# EUROPEAN PATENT APPLICATION

(11) **EP 3 939 950 A1**
(43) Date of publication of application: **19.01.2022**
(21) Application number: 20186247.1
(22) Date of filing: 16.07.2020
(51) Int. Cl.: C04B 41/89

(54) **A SLAB MADE OF A CERAMIC MATERIAL AND A METHOD FOR REALIZING A SLAB MADE OF A CERAMIC MATERIAL**

(71) Applicant: Marazzi Group Srl, 41049 Sassuolo (IT)
(72) Inventor: CORRADINI, Lorenzo, 41049 Sassuolo (IT); RIGHI, Fabio, 41049 Sassuolo (IT)
(74) Representative: Corradini, Lorenzo

(57) **Abstract**

A ceramic slab (1) comprising a substrate (2) of ceramic material and an upper layer (3), wherein the upper layer (3) comprises a decoration (4) printed by digital inkjet printing and a protective coating (10) arranged above said decoration (4), wherein said protective coating comprises nanoparticles (11) of metal oxides, said nanoparticles (11) being set in a free upper surface (5) of said protective coating (10).

## Description

The present invention relates to a slab made of a ceramic material endowed with one or more functionalities such as, for example, antibacterial, antiviral, self-cleaning, catalytic, hydrophilic or hydrophobic. The present invention further relates to a method for realizing a functionalized slab made of a ceramic material. In particular, said method is able to impart said functionality to the ceramic slab.

Ceramic tiles provided with a surface comprising nanoparticles able to impart particular functionality to said tiles are known. In particular, US 7,250,178 B2 describes a ceramic tile in which the functionalizing additive, i.e. the nanoparticles, is mixed with the glaze applied on the surface of the ceramic substrate before baking said tile. In this way, the nanoparticles are mixed homogeneously throughout the thickness of the glaze, so that the tile can retain functionality even following wear of the surface, as the nanoparticles are substantially protected by the glaze. However, because the glaze envelops the nanoparticles it limits their effectiveness. Moreover, so that we always have a sufficient number of nanoparticles exposed on the surface of the glaze that can perform their function, it becomes necessary to add a considerable amount of nanoparticles to the glaze, which on the one hand increases the cost of the tile, and on the other hand may alter the tone of the colour of the glaze.

The present invention aims first of all to supply an alternative ceramic slab, and a method for realizing a ceramic slab, which, according to some embodiments thereof, is directed at solving one or more of the problems arising from the prior art.

Accordingly, the present invention, according to a first independent aspect thereof, proposes a slab made of a ceramic material comprising a substrate of ceramic material provided with a free upper surface and comprising nanoparticles configured for endowing the slab with predetermined functionalities such as, for example, antibacterial, antiviral, catalytic, anti-pollution, self-cleaning functionality, hydrophobicity or hydrophilicity; with the characteristic feature that said nanoparticles are set in said free upper surface of the slab. In this way, the particles have greater reactivity, i.e. can perform their functionality extremely efficiently. In fact, the term "set" means that the particles are anchored, for example mechanically, on said upper surface. In particular, the particles may be set in respective sites present in the upper surface of the slab, for example notches, pits or depressions of said upper surface. Said sites may already exist on the surface of the material or may be created during application of the nanoparticles. Therefore the nanoparticles offer an increased reactive free surface that makes it possible for them to perform their functionality. Moreover, the fact that the nanoparticles are set, i.e. anchored mechanically, in the upper surface means that they have higher abrasion resistance compared to particles simply deposited on said upper surface, and optionally bound to it by means of a binder. For example, at least 60% of the nanoparticles, advantageously more than 80% of the nanoparticles, preferably all of the nanoparticles may emerge from said upper surface of the slab. In fact it should be noted that if the particles were incorporated in the material of the slab or in a binder they could not perform their functionality or at least their functionality would be very limited, if not zero, since the surface of the particles would be enveloped in the material of the slab. According to a preferred embodiment, at least 60%, advantageously more than 80%, preferably all of the nanoparticles have an exposed surface area greater than or equal to at least 30% of the surface in question, advantageously greater than or equal to the 50% of the surface in question. In a preferred embodiment, the nanoparticles may be present in a thickness, called penetration thickness, less than 5 µm, preferably less than 1 µm measured from the upper surface of the slab. For example, at least 60% of the nanoparticles, advantageously more than 80% of the nanoparticles, preferably all of the nanoparticles are present in said penetration thickness. It should be noted that by having most, or preferably all, of the particles emerging on the surface and thus able to perform their functionality, it becomes possible to limit the amount of nanoparticles in the slab, so as to contain the costs of the product. Moreover, by reducing the amount of nanoparticles it is possible to contain the effect thereof on the aesthetics of the slab, i.e. on the tonality or on the colour of the surface of the slab.

The nanoparticles may be selected in relation to the functionality that it is desired to impart to the slab and may comprise particles of organic or, preferably, inorganic compounds. In a preferred embodiment, the nanoparticles may advantageously comprise particles of metal oxides such as for example oxides of copper, titanium, zinc, aluminium, magnesium, silver. The nanoparticles may also be formed from particles of elements or non-oxide inorganic compounds, for example silver, nitrides, carbides. Inorganic compounds are to be preferred to organic compounds for their greater durability and for their greater resistance to chemicals and atmospheric agents. It is possible for the nanoparticles to be formed from mixtures of particles of different substances, for example for the purpose of endowing the slab with more functionality.

The nanoparticles are present in the slab in an amount that may advantageously be less than 4 g/m², preferably less than 2 g/m², even more preferably less than 1 g/m², for example between 0.1 and 1 g/m². Preferably, the nanoparticles may be uniformly distributed on the free upper surface of the slab.

The nanoparticles may have an average diameter less than 100 nm, preferably less than 50 nm, for example less than 10 nm. The nanoparticles may, moreover, have an average diameter greater than 0.1 nm, preferably greater than 1 nm, for example greater than 5 nm. It should be noted that at equal weight of nanoparticles per square metre, a smaller average diameter of the particles gives a higher specific surface area and thus greater reactivity. Moreover, by containing the size of the nanoparticles it is possible to contain their effect on the aesthetics of the slab.

The slab made of a ceramic material is preferably made of porcelain stoneware. However, other ceramic materials may be used, for example monoporous, single-fired, terracotta and clinker. The ceramic slab may be of the glazed or unglazed type.

In the case of unglazed ceramic slab, it is formed entirely from ceramic material, preferably in porcelain stoneware or terracotta. In that case the slab may comprise several superposed layers, wherein said layers may have different physical and/or mechanical and/or chemical characteristics. For example, the slab may have a lower layer and an upper layer, in which said free surface may be provided entirely in said upper layer. In that case it is preferable that the upper layer should be obtained with a composition such as to guarantee a low, or zero, porosity and a high aesthetic content, for example a particular colour, while the lower layer may be obtained with a more economical composition.

In the case of unglazed slab, the nanoparticles may preferably be set in the upper surface of the ceramic material forming the slab, for example in the upper face of the upper layer.

In the case of glazed slab, this comprises a substrate of ceramic material and an upper layer, wherein said upper layer may preferably comprise at least coating of an upper face of the substrate. Preferably said coating may comprise at least one ceramic glaze. In that case the free upper surface may be provided entirely in said upper layer. The solution that envisages a glazed slab, or else is provided with an upper layer, is to be preferred for restricting the amount of nanoparticles to be applied. In fact, a glazed surface has a lower open porosity compared to an unglazed surface, and the latter will therefore require a larger amount of nanoparticles.

The upper layer may advantageously comprise a primer coating able to cover the upper face of the substrate. The primer coating has the function of making the substrate impermeable and, optionally, covering the colour of the substrate. The primer coating may also be able to supply a background colour for optional decoration of the slab. The primer coating may comprise a glaze, an engobe and/or a smaltobbio. The primer coating may comprise one or more pigments able to impart one or more colours to said coating.

In addition to or as an alternative to the primer coating, the upper layer may advantageously comprise a protective coating for covering the upper face of the substrate. The protective coating is moreover able to cover the optional primer coating arranged between the upper face of the substrate and said protective coating. The protective coating has the function of making the substrate impermeable as well as supplying abrasion resistance and resistance to chemicals, in particular for protecting optional decoration of the slab beneath said protective coating. The protective coating has the further function of defining the surface finish of the slab, in particular gloss or matt finish. The primer coating may comprise a glaze or a grit, preferably transparent or translucent. It should be noted that the protective coating may be absent in some applications, such as for example in slabs for covering walls.

According to a preferred embodiment, the upper layer comprises a decoration. Preferably, the decoration is printed by digital inkjet printing. Said decoration may represent any type of design, preferably imitating wood, natural stone, marble, cement, resin or metal. The decoration is advantageously arranged above the primer coating and/or beneath the protective coating. In particular, the primer coating is arranged between the decoration and the substrate, while the decoration may advantageously be arranged between the protective coating and the substrate, and more preferably between the protective coating and the primer coating.

Preferably, the penetration thickness of the nanoparticles of the coating may be less than a fifth, advantageously less than, preferably less than a hundredth of the total thickness of the upper layer. In particular, the penetration thickness of the nanoparticles of the coating may be less than a fifth, advantageously less than a tenth, preferably less than a hundredth of the thickness of the single protective coating or primer coating. It should be noted that the relation between the penetration thickness and the thickness of the upper layer, or of the coatings that make it up, may be independent of the absolute value of penetration thickness expressed previously in πm.

The upper layer may further comprise refractory particles configured for modifying the roughness of the free upper surface of the slab. According to a preferred embodiment, said refractory particles may be selected from the group comprising alumina trihydrate, tabular alumina and aluminium-zirconium silicate (AZS). Preferably said refractory particles are present in the primer coating, for example mixed with the glaze, so as not to opacify the protective coating. Moreover, being arranged in the primer coating, said refractory particles make it possible to obtain a surface of the slab that is soft to the touch, easy to clean and slip-resistant. In this way it is possible to create a synergistic effect between easy cleanability of the surface with antibacterial and/or antiviral functionality, which involves obtaining a product with extremely high sanitary quality even in the case of high slip-resistance. The refractory particles may have a diameter less than 50 µm, preferably less than 35 µm. In greater detail, 90% of the refractory particles may have a diameter less than 30 µm, preferably less than 20 µm. It is moreover possible that 50% of the refractory particles could have a diameter less than 10 µm, preferably less than 7 µm. Advantageously, said refractory particles are present in the upper layer in an amount between 1 and 20 wt% of the upper layer, preferably between 1 and 20 wt% of the primer coating. The use of said particles for modifying the roughness of the surface of the slabs is described in EP 2832715 A1, which is incorporated here by reference and is to be regarded as part of the present description.

Regardless of the presence or absence of the upper layer, the free upper surface of the slab may comprise a structure in relief, preferably produced according to a predetermined design. The structure in relief is preferably produced in the substrate of ceramic material, and if the upper layer is present it is manifested via said upper layer. It is, moreover, possible for the structure in relief to be produced in the upper layer. However, in a preferred embodiment, the slab does not have said structure, i.e. is substantially smooth. A smooth surface is in fact easier to clean and easier to sanitize.

Furthermore, regardless of the presence or absence of the upper layer, the substrate of ceramic material may comprise one or more pigments. In particular, if the upper layer is present, said pigments may be configured to replicate or imitate the colour of the decoration and/or primer coating. If the upper layer is absent, the pigments may be distributed in the substrate so as to form a decoration according to a random or predetermined pattern or so as to define a coloration substantially in a solid colour.

Preferably, in order to restrict the costs of production and avoid an excessive consumption of nanoparticles, the latter are provided exclusively on the finished surfaces of the slab, i.e. those that are left exposed to view following installation, preferably only on the upper surface. In some cases it is possible that lateral surfaces of the slab may comprise said particles, but in general the lower surface and the lateral surfaces of the slab are advantageously free from said nanoparticles.

It should be noted that according to some embodiments of the invention, the free upper surface of the slab may have mechanical or chemical finishes. For example, the free upper surface of the slab may be sanded, lapped, brushed, ground and polished and/or bush-hammered. According to the invention, the nanoparticles may be added to the slab after said finishing processes so as to avoid wastage of nanoparticles, and consequent increase of costs, and in such a way that the processing does not lead to a reduction in effectiveness of said nanoparticles. It is emphasized that, of these finishes, sanding is to be preferred as it gives a surface with extremely low roughness, which is therefore easy to clean and sanitize.

The slab may be used as a product for covering walls or floors, both external and internal. Moreover, the slab may be used for covering, or forming, panels for furniture. According to a preferred embodiment, the slab may be used as a table top or worktop for kitchens, bathrooms, laboratories or other applications.

It should be noted that in the context of the present invention, "slab" means an essentially flat element without limitation of size. The thickness is preferably at least 3 mm, preferably at least 6 mm, even more preferably at least 10 mm, for example 12 mm. It should be noted that the solution proposed by the present invention, in the embodiment that envisages application of the nanoparticles only on the upper surface, proves particularly effective and economical in the case of large thicknesses, since nanoparticles are not deposited on the lower surface and, in particular, on the lateral surfaces of the slab.

A second independent aspect of the invention provides a method for realizing a ceramic slab that comprises the steps of: providing a slab made of a ceramic material having an upper surface, and setting nanoparticles of metal oxides in a free upper surface of said protective coating. On applying the nanoparticles on the surface of the moulded and baked slab, they are completely or almost completely exposed on the upper surface of the slab, so as to expose the surface in question and effectively perform the function in question. Moreover, since the particles are set in the surface of the slab, it is possible to combine the effectiveness of the particles with high abrasion resistance and/or scratch resistance. Preferably, the nanoparticles may be projected onto the free surface of the slab so that they remain set there. For example, the nanoparticles may be accelerated towards the upper surface of the slab so as to impact said upper surface and remain set there. In fact, on striking the upper surface of the slab, the particles may become set in surface asperities of the slab or may create pits in which they become set. It should be noted, moreover, that by applying the nanoparticles on the slab that is already formed, there is complete freedom in selecting the slab on which the nanoparticles are to be applied. For example, the slab may have any type of decoration or colour without it becoming necessary to limit application of the nanoparticles to just certain products or without it becoming necessary to create a range of special products suitable for being functionalized. Moreover, the slab may be taken from stock without needing to schedule dedicated production for the functionalized slabs.

According to a preferred embodiment, said particles are projected towards the free upper surface of the slab by means of ultrasonic waves. Ultrasonic waves are relatively easy to generate and can be oriented in a preferred direction. Moreover, the use of ultrasonic waves does not involve particular criticality or contraindications from the environmental and workplace safety viewpoint. Advantageously, said waves have a frequency between 20 kHz and 200 MHz, preferably between 20 and 200 kHz. Moreover, the ultrasonic waves can irradiate the surface of the slab with a power between 1 and 100 W/cm², preferably greater than 20 W/cm² (cm² = square centimetre; m² = square metre). With these values of frequency and/or power it is possible to accelerate the nanoparticles to a velocity such as to guarantee effective setting on the surface of the slab. Preferably, during said irradiation with ultrasound, the upper surface of the slab may be placed at a distance from the emitters of said waves equal to at least 1 mm, preferably greater than 5 mm. Moreover, the upper surface of the slab may be placed at a distance from the emitters of said waves less than 20 mm, preferably less than 10 mm. The inventors found, surprisingly, that by reducing the distance between the surface to be irradiated and the emitters it is possible to increase the amount of nanoparticles deposited. Therefore it is possible to adjust said distance so as to balance the effectiveness of the nanoparticles and their effect on the aesthetics of the product. As an alternative to using said ultrasonic waves, the nanoparticles may be projected onto the upper surface by means of electromagnetic waves, or by application of an electromagnetic, or magnetic or electric field.

The slab may be irradiated for a time of less than a minute. According to other embodiments, the slab may be irradiated for a time between 1 minute and 30 minutes.

The nanoparticles may be arranged beforehand on the upper surface of the slab before being set. Said step of prior provision of the nanoparticles may take place according to a first or a second possibility or a combination thereof.

According to a first possibility, the method envisages arranging, on the upper surface of the slab, a substance comprising said nanoparticles, for example a particulate formed from said nanoparticles, or preferably a liquid, or a gel, in which said nanoparticles are suspended.

A second possibility envisages arranging, on said upper surface, a substance comprising a precursor of said nanoparticles, and then forming said nanoparticles. According to a preferred embodiment, said substance is a suspension or, preferably, a solution containing said precursor. Said precursor is advantageously a metal complex, for example a metal acetate. In this second possibility, the nanoparticles may preferably be generated by irradiation with ultrasonic waves. Ultrasound may in fact be used for causing the formation and subsequent cavitation of bubbles in the substance, cavitation of the bubbles involving precipitation of the nanoparticles from the substance according to a so-called sonochemical mechanism. The nanoparticles generated are then projected by said ultrasonic waves onto the surface of the slab. The present second possibility has the advantage of envisaging formation of the nanoparticles near the surface of the slab on which they are to be set, immediately before or substantially simultaneously with setting thereof. This avoids storage and handling of the particles in the work environment, with notable advantages from the viewpoint of the healthiness and environmental compatibility of the process.

The substance defined in the first and second possibility described above is preferably a liquid and comprises a vehicle, or solvent. Advantageously said vehicle or solvent comprises water and/or organic solvents such as for example alcohols, preferably ethanol. Water is to be preferred as solvent or vehicle, to promote the healthiness and environmental compatibility of the process.

Advantageously, the substance according to the first or second possibility is arranged only on the upper surface of the slab. However, the possibility of applying the substance on other surfaces of the slab as well, for example the lateral surfaces, is not excluded. Limiting application of the nanoparticles to just the surfaces of interest makes it possible to economize on nanoparticles and speed up the production process. In a first, preferred embodiment, the substance may be, for example, poured or sprayed onto the upper surface of the slab.

In a second embodiment, the slab may be arranged above a container containing said substance. In this second embodiment the slab is arranged upside down with the upper surface facing downwards, i.e. towards the substance. In this way it is possible to bring the upper surface of the slab into contact with the substance without necessarily having to immerse the whole slab in the substance. In this second embodiment, the possibility of partially immersing the slab in the substance so that the latter wets the upper surface of the slab and a portion of the lateral surfaces of said slab, in particular the portions proximal to the upper surface, is not excluded.

According to an alternative embodiment, the slab may be immersed in the substance partially or completely. In that case projection of the nanoparticles is activated selectively just on the surfaces of interest, in particular only on the upper surface.

The method may moreover comprise a step of removing the substance and/or nanoparticles in excess, following the projection step. The removal step may envisage aspiration, drying or mechanical removal. Aspiration is preferred as it permits recovery of the substance and/or of the nanoparticles.

Advantageously, the steps of arranging the nanoparticles and/or the substance on the upper surface of the slab beforehand, the optional step of generating said nanoparticles and the step of projecting the nanoparticles, the step of removing the substance and the step of activating the nanoparticles take place in a continuous process. In the context of the present invention, "continuous process" means that said steps take place sequentially and without interruptions.

The slab may be transported on one or more conveyors through a station for application of the nanoparticles, in which one or more of the following steps are carried out: prior provision of the nanoparticles and/or of the substance on the upper surface of the slab, the optional step of generating said nanoparticles and the step of projecting the nanoparticles onto the upper surface of the slab, the step of removing the substance in excess, and the activation step. Preferably during said steps the slab is transported in a continuous movement, without interruptions, through the station for application of the nanoparticles. Preferably, the slab may advance through the station for application of the nanoparticles at a speed greater than or equal to 5 m/min, preferably greater than or equal to 10 m/min.

Preferably, application of the nanoparticles, in particular the steps of arranging the nanoparticles and/or the substance on the upper surface of the slab beforehand, the optional step of generating said nanoparticles and the step of projecting the nanoparticles, the step of removing the substance and the step of activating the nanoparticles, takes a total time of less than 2 hours, preferably less than 1 hour, even more preferably less than 30 minutes.

The method may further comprise a step of activation of the nanoparticles to impart particular functionality to said particles, such as for example antiviral, hydrophobic, hydrophilic, self-cleaning, antibacterial and/or catalytic functionality. For example, said nanoparticles may be irradiated with radiation, preferably electromagnetic, in order to modify its characteristics and activate said functionalities thereof. The electromagnetic radiation may be ultraviolet, X-ray, laser, excimer laser, electron beam or other forms of radiation and may be selected in relation to the nanoparticle to be treated and the functionality to be activated. Activation may also occur during the useful life of the slab, for example, by irradiating the slab with UV radiation it is possible to activate the antibacterial functionality of titanium dioxide nanoparticles.

The step of prior provision of the slab envisages the step of prior provision and formation of a ceramic body. The ceramic body comprises a mixture of ceramic raw materials such as, for example, clays, kaolins, feldspars, silica, calcium carbonate, metal oxides and others. The raw materials are advantageously ground and atomized, i.e. by wet grinding and spray drying. It is not excluded that the raw materials may be ground dry and, optionally, agglomerated. The body is then moulded into the form of slabs by pressing, or compaction, which may be continuous or discontinuous. In the case of discontinuous pressing, the body is pressed, preferably in an isostatic press, in stationary conditions, i.e. in conditions in which the body is fixed and does not advance, for example it is placed in a die. In the case of continuous pressing, the body is placed on a belt, or a conveyor, and is compacted while advancing in a particular direction, for example by means of one or more compacting rolls. Furthermore, pigments able to supply a colour or a decoration to the slab may be added to the body. During the moulding step, the upper surface of the slab may be provided with a structure in relief, by pressing with structured pads or belts. Following the moulding step, the body may be dried.

The step of prior provision of the slab may envisage application of an upper layer on the ceramic body substrate, previously formed, and preferably dried.

In particular, the method may envisage a step of applying the primer coating. The primer coating may be applied preferably wet, advantageously by means of airless spraying, skim-coating or digital inkjet or valve jet printing. The primer coating is preferably applied directly on the upper face of the substrate.

The method may, moreover, comprise application of a decoration on the surface of the slab. The decoration is preferably applied by inkjet printing using ceramic inks. It is not excluded that, according to alternative embodiments, the decoration could be applied by other techniques such as, for example, flexography or screen printing. The decoration is preferably applied on the primer coating. However, in some alternative embodiments the decoration might be applied directly on the upper face of the slab.

Moreover, a step of application of the protective coating may be provided. The primer coating may be applied wet, for example by airless spraying, skim-coating or digital inkjet or valve jet printing. The protective coating may also be applied dry in the form of grit, for example by applying a glue, preferably by digital printing, and then spreading of the grit on the glue. In this way it is in fact possible to apply large amounts of protective coating so as to be able to proceed to smoothing. With inkjet application of the glue it is, moreover, possible to obtain a particularly uniform layer of grit, which makes it possible to improve the smoothing, obtaining a surface that is extremely smooth and easy to clean and sanitize. The primer coating is preferably applied above the decoration.

The slab formed, and optionally dried and/or decorated, is baked, preferably in continuous roller kilns. The tiles are baked according to a cycle of heating and cooling that envisages reaching a maximum temperature above 700°C, for example above 900°C, preferably between 1000°C and 1250°C.

Following the baking step, the method may envisage one or more operations of mechanical finishing of the slab such as, for example, grinding, lapping, smoothing, bush-hammering, brushing, grinding and polishing. Grinding is always compatible with the other finishes. Smoothing is to be preferred, where compatible with the desired aesthetic effect, to promote sanitary quality of the product.

The step of applying and setting the nanoparticles is preferably after the finishing step.

Further features and advantages of the invention will become clear on reading the following description supplied by way of example and non-limiting, referring to the appended drawings:
Fig. 1 shows an axonometric top view of a ceramic slab in a first embodiment;
Fig. 2 shows an enlargement of the section according to plane II-II in Fig. 1;
Fig. 3 shows an enlargement of area III in Fig. 2;
Fig. 4 shows an enlargement of area IV in Fig. 3;
Fig. 5 shows an enlargement of area III in Fig. 2, in a second embodiment;
Fig. 6 shows an enlargement of area III in Fig. 2, in a third embodiment;
Fig. 7 shows some steps of a method according to a first embodiment of the invention;
Fig. 8 shows some steps of a method according to a second embodiment of the invention;
Fig. 9 shows some steps of a method according to a third embodiment of the invention.

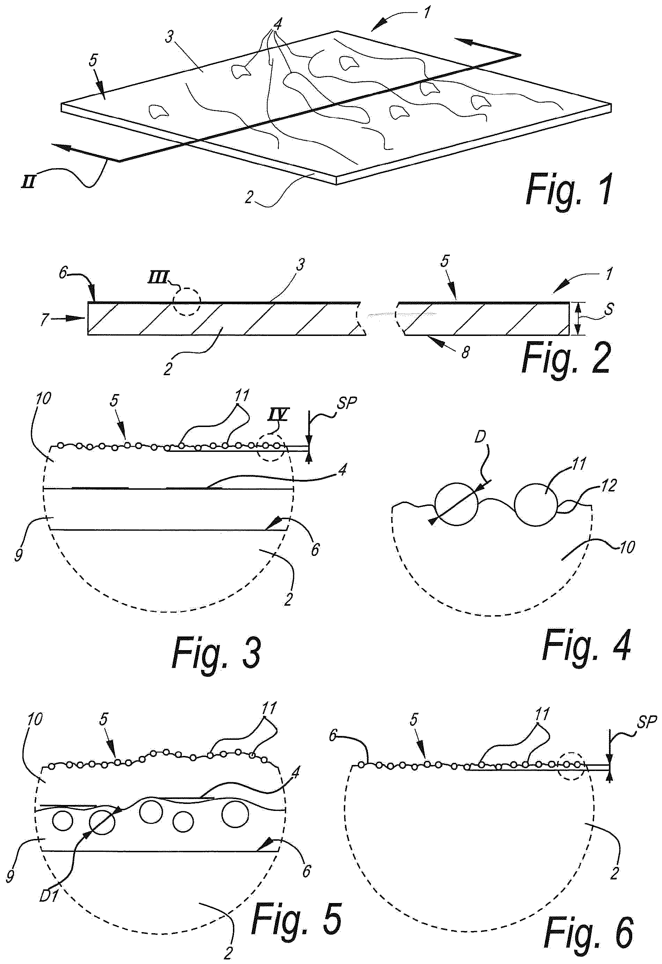

Fig. 1 shows an axonometric top view of a ceramic slab 1 comprising a substrate 2 of porcelain stoneware and an upper layer 3. The upper layer 3 comprises a decoration 4 obtained by digital inkjet printing visible on an upper surface 5 of the slab. The decoration 4 preferably represents an imitation of natural stone, wood, cement, metal or resin.

Fig. 2 shows an enlargement of the section according to plane II-II in Fig. 1. The slab 1 comprises a thickness S preferably greater than or equal to 3 mm, according to a preferred embodiment equal for example to 6, 10 or 12 mm.

As shown in Fig. 2, the upper layer 3 covers only an upper face 6 of the substrate 2 while the lateral 7 and lower 8 faces of the substrate 2 remain free from said upper layer 3.

Fig. 3 shows an enlargement of area III in Fig. 2. As shown in Fig. 3, the upper layer 3 comprises a primer coating 9 able to impart a background colour to the decoration 4 of the slab 1. The primer coating 9 is applied directly in contact with the upper face 6 of the substrate 2. In the example illustrated, the primer coating 9 comprises at least one glaze, engobe or smaltobbio, and advantageously a pigment.

As shown in Fig. 3, the decoration is printed on the primer coating 9.

Moreover, in the preferred embodiment shown in the figures, the upper layer comprises a protective coating 10 applied on top of the decoration 4. The protective coating 4 is preferably transparent or translucent to ensure visibility of the decoration 4. The protective coating 11 is preferably formed from a vitreous, or glass-ceramic material and in particular is formed from a glaze or a grit. The protective coating 10 may be gloss or matt. In the example illustrated, the protective coating 10 is polished or lapped in order to smooth surface asperities for easier cleanability of the upper surface 5, which is obtained in the protective coating 10.

Furthermore, in Fig. 3 and in the enlargement in Fig. 4 it is shown that the slab 1 comprises nanoparticles 11 set in the free upper surface 5 of the slab 1, in particular of the protective coating 10. The nanoparticles 11 are set, for example embedded, in suitable sites 12 obtained on the free upper surface 5 of the slab 1. Said sites 12 are formed, for example, from asperities, pits, depressions, open pores present on the surface of the slab 1. Said sites 12 may be formed by the impact of said nanoparticles 11 during application thereof. In the example illustrated in the figure, all of the nanoparticles 11 emerge from the free upper surface 5 of the slab 1, for example, all of the nanoparticles 11 have an exposed area equal to at least 30% of the said surface. In the example illustrated, all of the nanoparticles are present in a penetration thickness SP preferably less than 1 µm, for example approximately equal to 0.5 µm measured from the upper surface 5 of the slab 1. Moreover, the nanoparticles 11 are uniformly distributed on the upper surface 5 of the slab 1. The nanoparticles 11 are present in the slab in an amount of less than 1 g/m², for example between 0.1 and 1 g/m².

In the example, the nanoparticles 11 have an average diameter D between 0.1 nm and 100 nm, preferably between 1 nm and 50 nm. The nanoparticles 11, according to the example, consist of oxides of metals selected from the group comprising: zinc, copper, titanium, magnesium and silver. In particular, the oxides of copper, zinc and silver have antibacterial functionality. Titanium oxide has hydrophobic or hydrophilic, antibacterial and photocatalytic behaviour, especially if irradiated, in use, with ultraviolet radiation. Copper oxide has antiviral activity.

Fig. 5 shows a variant of the slab 1 in Fig. 3, in which the primer coating 9 comprises refractory particles 13, for example formed from alumina trihydrate. The refractory particles 13 have a diameter D1 of less than 35 µm. In greater detail, 90% of the refractory particles 13 have a diameter D1 less than 20 µm. It is moreover possible for 50% of the refractory particles 13 to have a diameter D1 less than 7 µm. Advantageously, said refractory particles 13 are present in the primer coating 9, mixed with the glaze, in an amount between 1 and 20 wt% of the primer coating 9. The refractory particles 13 are configured for modifying the roughness of the upper surface 5 of the slab 1, so as to obtain an upper surface 5 of the slab that is soft to the touch, easy to clean, and slip-resistant.

Fig. 6 shows a second embodiment, which differs from the first embodiment shown in Figs. 3 and 4 exclusively in that the slab 1 does not have the upper layer 3. In this embodiment the free upper surface 5 of the slab coincides substantially with the upper face 6 of the substrate 2. In that case the nanoparticles 11 are set in the upper face 6 of the substrate 2. Other characteristic features of the slab 1 and nanoparticles 13 coincide with those indicated with reference to the first embodiment.

It should be noted that the drawings presented are purely schematic to facilitate understanding of the invention. Therefore the proportions and the scale are not faithfully represented. Moreover, the nanoparticles 11 and the refractory particles 13 are shown as spherical, but may also have different shapes, both regular and irregular.

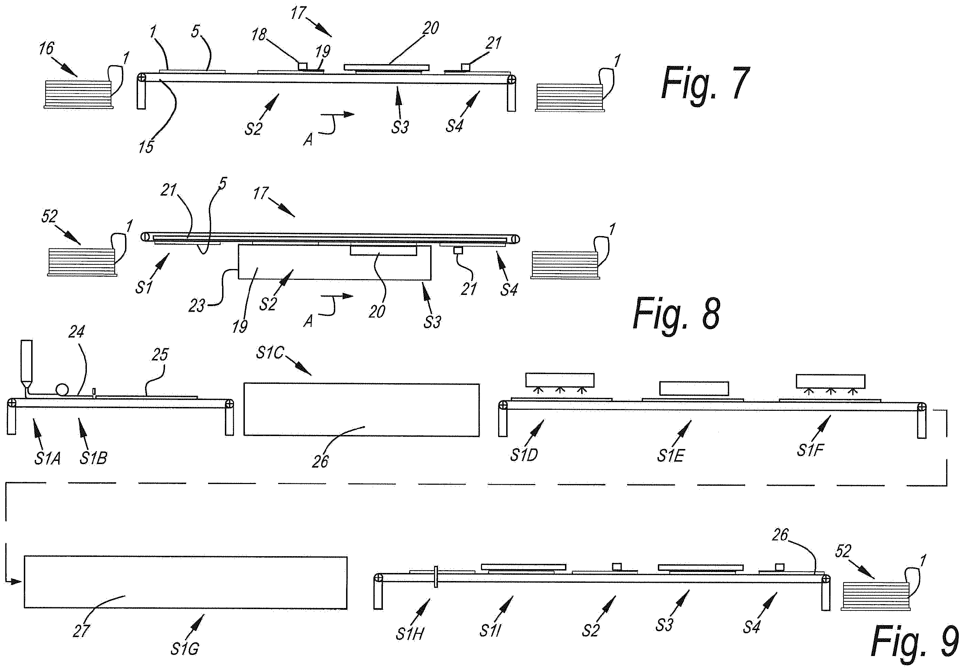

Fig. 7 shows some steps of a method for realizing the slab 1 in Fig. 1. The method envisages a step S1 of first providing a slab 1 on a conveyor 15, for example from a stock 16 of slabs 1, for example a pallet. The conveyor 15 is able to transport the slab 1 in a direction of advance A preferably at constant speed and continuously, i.e. without interruptions. Preferably, in this first embodiment, the slab 1 is arranged on the conveyor with the upper surface 5 facing upwards.

During advance, the slab 1 reaches an application station 17 of the nanoparticles 11 that comprises an applicator 18 configured for carrying out a step S2 of prior placement of a substance 19 on the upper surface 5 of the slab 1. The applicator 18 is configured for spraying or pouring the substance 19.

The substance 19 is preferably in the form of liquid or gel and, in a preferred embodiment, is a solution comprising a solvent, preferably water and a precursor of the metal oxide, for example a metal acetate.

The application station 17 comprises an ultrasound generating device 20 for carrying out a step S3 of setting the nanoparticles 11. In particular, the ultrasound generating device 20 is configured for generating ultrasound with a frequency between 20 kHz and 200 MHz, preferably 20 and 200 kHz and for irradiating the upper surface 5 of the slab 1 with a power between 1 and 100 W/cm², preferably greater than 20 W/cm. Owing to irradiation with ultrasound, bubbles are generated in the substance 19, cavitation of which generates the nanoparticles 11. The same ultrasound projects the nanoparticles 11 onto the upper surface 5 of the slab, setting them there. The upper surface 5 of the slab 1 may be placed at a distance from the emitters of said waves equal to at least 0.1 mm, preferably greater than 1 mm, and preferably greater than 5 mm. Moreover, the upper surface of the slab may be placed at a distance from the emitters of said waves less than 20 mm, preferably less than 10 mm. The distance between the upper surface 5 and the ultrasound emitters may be regulated so as to modify the desired amount of nanoparticles.

The slab 1 then reaches a removal device 21 of the substance 19, for carrying out a step S4 of removal of the substance 19 or of a residue of said substance. Said removal device 21 may be for example an aspirator or a dryer. The aspirator is preferred, as it makes it possible to recover said substance to recycle it or dispose of it correctly. The slab 1 may then be boxed, packaged and/or put in storage.

Fig. 8 shows a variant of the method. The method illustrated in Fig. 8 differs from that illustrated in Fig. 7 in that the slab 1 is transported by the conveyor 15 with the upper surface 5 facing downwards, for example is retained by suitable retaining devices 22 such as suckers, vacuum means, or mechanical retaining means. The application station 17 in the figure comprises a tank 23 containing the substance 19 so that the slab 1, during advance, comes into contact with the surface 5 of the bath of substance 19. The ultrasound generating device 20 may be immersed in the substance 19.

Fig. 9 shows some steps of a method according to the invention in a third embodiment. The method in Fig. 9 envisages that the method described in Fig. 7 or in Fig. 8 is in line with a ceramic production process. In particular, the method comprises a first step S1A of prior placement of a ceramic body on a conveyor 15 so as to form a powder bed 24. The powder bed is then compacted by continuous pressing in a step S1B. The compacted powder bed 24 is then cut to form crude slabs 25. The crude slabs 25 then undergo drying S1C in a dryer 26.

The embodiment shown in Fig. 9 then envisages application SID of the primer coating 9 on the upper surface of the crude slab 25, digital inkjet printing S1E of the decoration 4 and application S1F of the protective coating 10. The primer coating 9 is preferably applied wet by airless spraying. The protective coating 10, according to a preferred embodiment, is applied dry in the form of grit, preferably with prior application of a glue for example by digital printing. To produce a slab according to the embodiment in Fig. 6, the steps from SID to S1F may be omitted.

The crude slab 25 is then baked S1G in a continuous roller kiln 27 up to a maximum temperature between 1200°C and 1250°C. The slab 1 may then be finished mechanically, for example ground S1H and smoothed S1I, prior to application of the nanoparticles 11. From now on the process continues as described with reference to Figs. 7 or 8.

The invention thus conceived is subject to numerous changes and variants, all within the scope of the inventive concept.

Moreover, all the details are substitutable by other technically equivalent elements. In practice, the materials used, as well as the contingent shapes and dimensions, could be any, according to the requirements, while remaining within the scope of protection of the following claims.

## Claims

1. Ceramic slab (1) comprising a substrate (2) of ceramic material and an upper layer (3), wherein the upper layer (3) comprises a decoration (4) printed by digital inkjet printing and a protective coating (10) arranged above said decoration (4), in which said protective coating comprises nanoparticles (11) of metal oxides, **characterized in that** said nanoparticles (11) are set in a free upper surface (5) of said protective coating (10).

2. Slab (1) according to Claim 1, **characterized in that** said nanoparticles (11) emerge from said upper surface (5) of the protective coating (10).

3. Slab (1) according to any one of the preceding claims, **characterized in that** at least 60% of said nanoparticles (11) are present in a thickness (SP) of the protective coating (10) equal to a fifth of the total thickness of said protective coating (10).

4. Slab (1) according to any one of the preceding claims, **characterized in that** said nanoparticles (11) comprise a diameter between 1 and 50 nm.

5. Slab (1) according to any one of the preceding claims, **characterized in that** said particles (11) consist of oxides of metals selected from the group comprising: zinc, copper, titanium, magnesium and silver.

6. Slab (1) according to any one of the preceding claims, **characterized in that** said substrate (2) is of porcelain stoneware.

7. Slab (1) according to any one of the preceding claims, **characterized in that** said protective coating (10) is a transparent glaze.

8. Slab (1) according to any one of the preceding claims, **characterized in that** said protective coating (10) is lapped or smoothed.

9. Slab (1) according to any one of the preceding claims, **characterized in that** said upper layer (3) is provided with particles (13) of alumina trihydrate (Al₂O₃·3H₂O).

10. Method for realizing a ceramic slab (1) comprising the steps of:
- first providing (SIB) a substrate (25) formed from a ceramic body;
- printing (S1E) digitally by inkjet printing, a decoration (4) on said substrate (25);
- coating (S1F) said decoration (4) with one protective coating (10), obtaining a crude slab (25);
- baking (S1G) the crude slab (25), obtaining the ceramic slab (1);
**characterized in that** the method comprises the step of setting (S3) nanoparticles (11) of metal oxides in a free upper surface (5) of said protective coating (10).

11. Method according to Claim 10, **characterized in that** said nanoparticles (11) are set in the upper surface (5) following the baking step (S1G).

12. Method according to Claim 10 or 11, **characterized in that** it comprises a step of lapping or smoothing (S1I) of the protective coating (10) before said setting step (S3).

13. Method according to any one of Claims 10 to 12, **characterized in that** said nanoparticles (11) are projected towards the free surface (5) of the protective coating (10) so that they are set there.

14. Method according to Claim 13, **characterized in that** said nanoparticles (11) are projected towards the free surface (5) by means of ultrasonic waves.

15. Method according to Claim 14, **characterized in that** it comprises the steps of:
- first providing (S2) a substance (19) on the free surface (5) of the ceramic slab (1);
- irradiating (S3) said substance (19) with said ultrasonic waves;
in which said substance comprises said nanoparticles (11) or comprises a precursor of said nanoparticles (11).
